# EUROPÄISCHE PATENTSCHRIFT

(11) **EP 0 670 962 B1**
(45) Veröffentlichungstag und Bekanntmachung des Hinweises auf die Patenterteilung: **18.09.1996**
(21) Anmeldenummer: 94920983.7
(22) Anmeldetag: 07.07.1994
(51) Int. Cl.: F03G 7/00

(54) **ELEKTROCHEMISCHER AKTOR**
ELECTROCHEMICAL ACTUATOR
ACTEUR ELECTROCHIMIQUE

(30) Priorität: 18.09.1993 DE 4331764
(43) Veröffentlichungstag der Anmeldung: 13.09.1995
(73) Patentinhaber: FRIWO SILBERKRAFT GESELLSCHAFT FÜR BATTERIETECHNIK MBH, D-47058 Duisburg (DE)
(72) Erfinder: BAUER, Helmut, D-47057 Duisburg (DE); DERISAVI-FARD, Foad, D-47259 Duisburg (DE); KICKEL, Heribert, D-47638 Straelen (DE)
(74) Vertreter: Ackmann, Günther
(86) Internationale Anmeldenummer: EP9402290
(87) Internationale Veröffentlichungsnummer: WO9508710

(56) Entgegenhaltungen:
- DE-C- 4 116 739
- FR-A- 1 316 099
- GB-A- 925 284
- US-A- 3 166 893
- US-A- 3 823 560

## Beschreibung

Die Erfindung betrifft einen dem Oberbegriff des Anspruches 1 entsprechenden elektrochemischen Aktor.

Bei dem aus der DE 41 16 739 C1 bekannten elektrochemischen Aktor sind in einem Gehäuse elektrochemische Zellen stapelförmig angeordnet, die bei Anlegen einer Gleichspannung je nach der gewählten Stromrichtung Gas erzeugen oder verzehren, so daß ein mit den Zellen verbundenes Balgorgan durch den Gasdruck ausgedehnt oder zurückbewegt wird. Die bekannten Ausführungen solcher Aktoren haben den Nachteil, daß bei einer unkontrolliert fortdauernden Stromzufuhr die Gasentwicklung andauert und die Gefahr einer Zerstörung des Gerätes besteht.

Der Erfindung liegt das Problem zugrunde, einen dem Oberbegriff des Anspruches 1 entsprechenden elektrochemischen Aktor derart auszubilden, daß eine zu große Gasentwicklung verhindert wird, wobei der Aktor seine Funktionsfähigkeit behält.

Dieses Problem wird durch die kennzeichnenden Merkmale des Anspruches 1 gelöst.

Die erfindungsgemäße Ausbildung des elektrochemischen Aktors hat den Vorteil, daß bei Erreichen der vorgegebenen Endstellung des Stellgliedes die Gasentwicklung abgebrochen wird und das Stellglied in der Endstellung verbleibt, bis durch einen Stromkreis in umgekehrter Stromrichtung ein Gasverzehr stattfindet und das Stellglied zurückbewegt wird. Der Elektroschalter wirkt somit als Notschalter, wobei eine Rückstellmöglichkeit vorhanden ist. Eine Selbstzerstörung des Gerätes wird verhindert, und die Eigensicherheit ständig erhalten.

Bei einer bevorzugten Ausführung besteht der Elektroschalter aus einer Kontaktfeder, die am Boden eines die Zellen aufnehmenden Gehäuses befestigt und mit der unteren Zelle leitend verbunden ist und die mit ihrem Kontaktkopf gegen das an den Stromkreis angeschlossene elektrisch leitende Stellglied anliegt, wobei die Bewegung der Kontaktfeder durch eine am Boden des Gehäuses vorgesehene Anschlagfläche begrenzt wird. Der Stromkreis wird über das Stellglied solange geführt, bis das Stellglied durch den Gasdruck von der gegen die Anschlagfläche anliegenden Kontaktfeder abgehoben ist. Eine konstruktiv einfache Lösung sieht vor, daß die Kontaktfeder innerhalb einer Öffnung im Boden des Gehäuses angeordnet und der Rand der Öffnung als Anschlagfläche ausgebildet ist.

Eine Rückstellung des Stellgliedes in eine Position, in der der Stromkreis wieder geschlossen wird, kann entweder durch Zurückschieben von Hand geschehen oder bevorzugt dadurch, daß die untere Zelle über eine Leitung mit einem im Deckel des Gehäuses angeordneten Anschlußpol verbunden ist, an den eine Gleichstromsenke anschließbar ist, bis die Kontaktfeder wieder gegen das Stellglied anliegt. Bei der bevorzugten Ausbildung wird zwecks Rückstellung des Stellgliedes der Elektroschalter durch einen Stromkreis überbrückt, der einen Gasverzehr bewirkt, wodurch das Stellglied wieder zurückbewegt wird und gegen die Kontaktfeder zur Anlage kommt, so daß der normale Stromkreis wieder geschlossen und bei Anlegen einer Gleichspannung wirksam wird.

Eine konstruktiv einfache Lösung sieht vor, daß zwischen der unteren Zelle und dem Boden des Gehäuses eine metallische Kontaktplatte angeordnet ist, die an die Leitung angeschlossen ist und an der die Kontaktfeder befestigt ist.

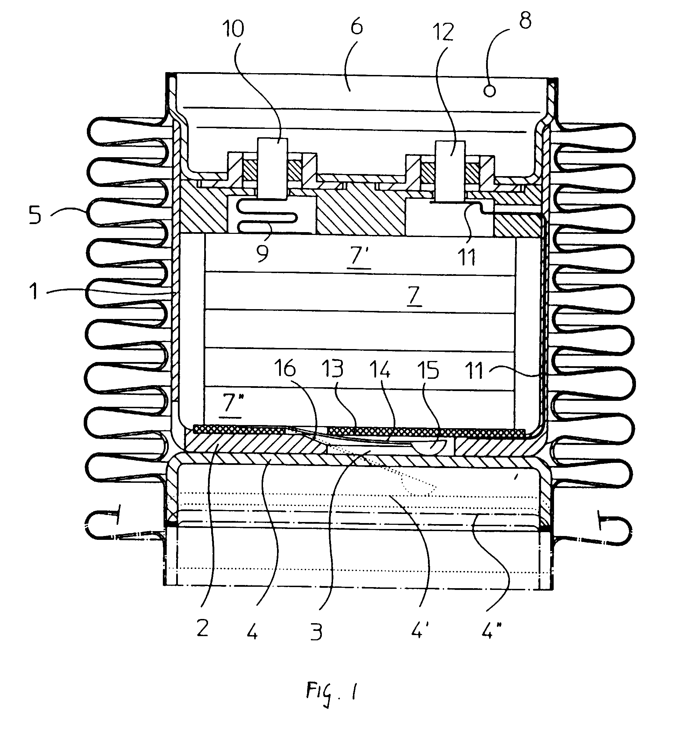

Der in der Zeichnung beispielhaft dargestellte elektrochemische Aktor besteht aus einem Gehäuse 1, dessen Boden 2 eine Öffnung 3 aufweist, einer metallischen Stellplatte 4 und einem metallischen Faltenbalg 5, der am Rand der Stellplatte 4 und am Gehäuse 1 befestigt ist. In dem durch einen metallischen Deckel 6 verschlossenen, aus einem elektrisch nichtleitenden Werkstoff bestehenden Gehäuse 1 ist ein aus elektrochemischen Zellen 7 bestehender Zellenstapel angeordnet, dessen obere Zelle 7' über eine Leitung 9 an einen im Deckel 6 angeordneten Anschlußpol 10 verbunden ist. Die elektrochemischen Zellen 7 bestehen jeweils aus einer Festkörperelektrode, z. B. aus Silber oder Nickelhydroxid, und einer gasbildenden bzw. gasverzehrenden Gegenelektrode, z. B. aus einer Kohlenstoffmasse. Zwischen der unteren Zelle 7" und dem Boden 2 des Gehäuses 1 ist eine aus Metall bestehende Kontaktplatte 13 angeordnet, die über eine Leitung 11 mit einem weiteren Anschlußpol 12 verbunden ist. An der Kontaktplatte 13 ist eine Kontaktfeder 14 befestigt, die in die Öffnung 3 im Boden 2 des Gehäuses ragt und deren Kontaktkopf 15 federnd gegen die Stellplatte 4 anliegt. Der Federweg der Kontaktfeder 14 wird durch eine am Rand der Öffnung 3 vorgesehene Anschlagfläche 16 begrenzt, wenn die Stellplatte 4 über die mit 4' bezeichnete Position hinaus vom Boden 2 weggedrückt ist. Schließlich ist am Deckel 6 oder am Faltenbalg 5 eine Anschlußstelle 8 für eine Gleichstromquelle vorgesehen, der mit dem leitenden Faltenbalg 5, die ebenfalls leitende Stellplatte 4, die daran anschließende Kontaktfeder 14 und die Kontaktplatte 13 eine Stromleitung zur unteren Zelle 7" des Zellenstapels bildet.

Wird an die Anschlußstelle 8 und den Anschlußpol 10 eine Gleichspannung angelegt, so wird je nach der Stromrichtung in den Zellen 7, 7', 7'' Gas z. B. Wasserstoff gebildet oder verzehrt. Im Falle einer Gasbildung entsteht ein Gasdruck, durch den das Stellglied 4 von dem Boden 2 des Gehäuses wegbewegt wird. Bei umgekehrter Stromrichtung findet ein Gasverzehr statt und das Stellglied 4 wird wieder zum Boden 2 zurückbewegt.

Bei jeder Stromunterbrechung bleibt der augenblickliche Gasdruck erhalten und das Stellglied 4 in seiner Position.

Die Hubbewegung des Stellgliedes 4 wird einerseits durch dessen Anlage gegen den Boden 2 des Gehäuses 1 und anderseits durch die Unterbrechung des stromleitenden Kontakts zwischen der Kontaktfeder 14 und der Stellplatte 4 begrenzt. Ist die Gleichspannung auf Gasbildung geschaltet, bleibt der Kontakt zwischen der Kontaktfeder 14 und der Stellplatte 4 solange bestehen, bis die Kontaktfeder 14 durch die Anschlagfläche 16 gehindert ist, der Stellplatte 4 weiter zu folgen (vgl. Position 4'). Der herrschende Gasdruck bewegt die Stellplatte bis in die Position 4", in der der Stromkreis zwischen der Kontaktfeder 14 und der Stellplatte unterbrochen ist. In dieser Position 4, welche die Endstellung der Hubbewegung kennzeichnet, wäre durch Umpolung der an der Anschlußstelle 8 und dem Anschlußpol 10 anliegenden Gleichspannung keine Rückstellung möglich. Daher ist für eine Rückstellung die Stromführung von der Kontaktplatte 13 über die Leitung 11 zu dem Anschlußpol 12 vorgesehen.

Durch Anlegen einer Gleichspannung an die Anschlußpole 10, 12 in einer einen Gasverzehr bewirkenden Stromrichtung wird der Gasdruck abgebaut und die Stellplatte 4 wieder zurückbewegt. Dabei kommt es zwischen Stellplatte 4 und Kontaktfeder 14 wieder zum Kontakt, so daß der Stromkreis für den Normalbetrieb wieder über die Anschlußstelle 8 geführt werden kann.

## Patentansprüche

1. Elektrochemischer Aktor mit einem abgeschlossenen Gasraum und mehreren stapelförmig angeordneten elektrochemischen Zellen, von denen jede eine Festkörperelektrode aus einem elektrochemisch reversibel oxidierbaren Stoff und einer gasbildenden bzw. gasverzehrenden Gegenelektrode enthält, wobei durch einen reversiblen, von einem Gleichstrom hervorgerufenen elektrochemischen Reaktionsablauf in dem Gasraum ein in eine Bewegung umsetzbarer Druckaufbau oder Druckabbau bewirkt wird und wobei der Gasdruck auf ein Stellglied einwirkt, gekennzeichnet durch einen mechanisch betätigbaren Elektroschalter, mit einer Kontaktfeder (14), die am Boden (2) eines die Zellen (7) aufnehmenden Gehäuses (1) befestigt und mit der unteren Zelle (7") leitend verbunden ist und die mit ihrem Kontaktkopf (15) gegen das an den Stromkreis angeschlossene elektrisch leitende Stellglied (4) anliegt, wobei die Bewegung der Kontaktfeder (14) durch eine am Boden (2) des Gehäuses (1) vorgesehene Anschlagfläche (16) begrenzt wird.

2. Elektrochemischer Aktor nach Anspruch 1, dadurch gekennzeichnet, daß die Kontaktfeder (14) innerhalb einer Öffnung (3) im Boden (2) des Gehäuses (1) angeordnet und der Rand der Öffnung (3) als Anschlagfläche (16) ausgebildet ist.

3. Elektrochemischer Aktor nach einem der Ansprüch 1 oder 2, dadurch gekennzeichnet, daß die untere Zelle (7") über eine Leitung (11) mit einem im Deckel (6) des Gehäuses (1) angeordneten Anschlußpol (12) verbunden ist, an den der Pluspol einer Gleichstromquelle zuschaltbar ist, bis die Kontaktfeder (14) wieder gegen das Stellglied (4) anliegt.

4. Elektrochemischer Aktor nach Anspruch 3, dadurch gekennzeichnet, daß zwischen der unteren Zelle (7") und dem Boden (2) des Gehäuses (1) eine metallische Kontaktplatte (13) angeordnet ist, die an die Leitung (11) angeschlossen ist und an der die Kontaktfeder (14) befestigt ist.

## Claims

1. An electrochemical actor having a closed gas chamber and a number of stacked electrochemical cells each of which contains a solid electrode made of an electrochemically reversibly oxidisable substance and a gas-evolving or gas-consuming companion electrode, a pressure increase or pressure decrease which is convertible into a movement being effected by a DC-produced electrochemical reaction process in the gas chamber, the gas pressure acting on a control member, characterised by a mechanically operated electric switch having a contact spring (14) which is secured to the base (2) of a casing (1) receiving the cells (7) and which is conductively connected to the bottom cell (7") and which engages by way of its contact head (15) with the electrically conductive control member (4) connected to the circuit, the movement of the contact spring (14) being limited by an abutment surface (16) on the casing base (2).

2. An electrochemical actor according to claim 1, characterised in that the contact spring (14) is disposed in an aperture (3) in the casing base (2) and the edge of the aperture (3) is devised as abutment surface (16).

3. An electrochemical actor according to claim 1 or 2, characterised in that the bottom cell (7") is connected by way of a line (11) to a connection post (12) disposed in the casing cover (6), the positive pole of a DC source being additionally connectable to the post (12) until the contact spring (14) returns into contact with the control member (4).

4. An electrochemical actor according to claim 3, characterised in that a metal contact plate (13) which is connected to the line (11) and to which the contact spring (14) is secured is disposed between the bottom cell (7") and the casing base (2).

## Revendications

1. Actuateur électrochimique comportant une chambre de gaz fermée et plusieurs piles électrochimiques empilées dont chacune comporte une électrode à corps solide en une matière qui peut être oxydée de manière électrochimiquement réversible et une contre-électrode qui produit du gaz et qui en consomme, un établissement ou une suppression de pression, qui peuvent être transformés en déplacement, étant obtenus par un déroulement dans la chambre de gaz de réactions électrochimiques réversibles qui est provoqué par un courant continu, et la pression gazeuse agissant sur un élément de régulation, caractérisé par un interrupteur électrique pouvant être actionné mécaniquement, comportant un ressort (14) de contact, qui est fixé au fond (2) d'un boîtier (1) recevant les piles (7) et qui est relié de manière conductrice à la pile (7") inférieure et dont la tête (15) de contact s'applique à l'élément (4) de régulation raccordé au circuit de courant et électriquement conducteur, le déplacement du ressort (14) de contact étant restreint par une surface (16) de butée prévue au fond (2) du boîtier (1).

2. Actuateur électrochimique suivant la revendication 1, caractérisé en ce que le ressort (14) de contact est monté à l'intérieur d'une ouverture (3) ménagée au fond (2) du boîtier (1) et en ce que le bord de l'ouverture (3) est agencé en surface (16) de butée.

3. Actuateur électrochimique suivant l'une des revendications 1 ou 2, caractérisé en ce que la pile (7") inférieure est reliée par l'intermédiaire d'un conducteur (11) à un pôle (12) de raccordement qui est monté dans le couvercle (6) du boîtier (1) et auquel peut être raccordé le pôle plus d'une source de tension continue jusqu'à ce que le ressort (14) de contact soit de nouveau en contact avec l'élément (4) de régulation.

4. Actuateur électrochimique suivant la revendications 3, caractérisé en ce qu'il est monté entre la pile (7") inférieure et le fond (2) du boîtier (1) une plaque (13) de contact métallique qui est raccordée au conducteur (11) et fixée au ressort (14) de contact.
